# EUROPEAN PATENT APPLICATION

(11) **EP 4 572 348 A1**
(43) Date of publication of application: **18.06.2025**
(21) Application number: 23876619.0
(22) Date of filing: 08.10.2023
(51) Int. Cl.: H04W 4/80

(54) **NFC POSITION PROMPTING METHOD, AND DEVICE**

(30) Priority: 12.10.2022 CN 202211247421; 20.12.2022 CN 202211641044
(71) Applicant: Huawei Technologies Co., Ltd., Shenzhen, Guangdong 518129 (CN)
(72) Inventor: HU, Yu, Shenzhen, Guangdong 518129 (CN); JI, Shenzhou, Shenzhen, Guangdong 518129 (CN); HUANG, Yalong, Shenzhen, Guangdong 518129 (CN)
(74) Representative: Thun, Clemens
(86) International application number: PCT/CN2023/123398
(87) International publication number: WO 2024/078417

(57) **Abstract**

Embodiments of this application provide an NFC location prompt method and a device. The method is applied to a first device, and the first device is capable of performing near field communication NFC with a second device. The method may include: determining whether a preset condition is met, where the preset condition is a first condition or a second condition, the first condition is that the second device establishes a communication connection to the first device, and the second condition is that a distance between the first device and the second device is less than or equal to a first preset distance; and when determining that the preset condition is met, displaying, on a display of the first device, prompt information indicating an NFC location. In this technical solution, when determining that the preset condition is met, the device can automatically display, on the display, the prompt information indicating the NFC location, to provide guidance for a user.

## Description

This application claims priorities to Chinese Patent Application No. 202211247421.5, filed with the China National Intellectual Property Administration on October 12, 2022 and entitled "DISPLAY METHOD AND DEVICE", and to Chinese Patent Application No. 202211641044.3, filed with the China National Intellectual Property Administration on December 20, 2022 and entitled "NFC LOCATION PROMPT METHOD AND DEVICE", both of which are incorporated herein by reference in their entireties.

### TECHNICAL FIELD

Embodiments of this application relate to the display field, and more specifically, to an NFC location prompt method and a device.

### BACKGROUND

Currently, by using a near field communication (near field communication, NFC) technology, a cockpit of a vehicle can support a capability of implementing a OneHop service with an electronic device, which brings much convenience to a user. For example, a smartphone having a Harmony operating system transfers, by tapping an NFC antenna in a vehicle, services such as navigation and music on the mobile phone to a cockpit having a cockpit-specific Harmony operating system, so that the services such as navigation and music on the mobile phone can be used in the cockpit.

However, due to layouts of cockpits of some vehicles, NFC antennas are deployed inside central display screens. Because a frame of the central display screen is narrow, there is no obvious sign of NFC. Therefore, when using the smartphone to tap the central display screen, the user does not know a specific location of the NFC antenna on the central display screen.

### SUMMARY

Embodiments of this application provide an NFC location prompt method and a device. In this technical solution, when it is determined that a preset condition is met, prompt information indicating an NFC location can be automatically displayed on a display, to provide guidance for a user.

According to a first aspect, an NFC location prompt method is provided. The method is applied to a first device, and the first device is capable of performing near field communication NFC with a second device. The method includes: determining whether a preset condition is met, where the preset condition is a first condition or a second condition, the first condition is that the second device establishes a communication connection to the first device, and the second condition is that a distance between the first device and the second device is less than or equal to a first preset distance; and when determining that the preset condition is met, displaying, on a display of the first device, prompt information indicating an NFC location.

It should be understood that a specific value of the first preset distance is not limited in embodiments of this application.

In this way, when determining that the preset condition is met, the first device may display, on the display of the first device, the prompt information indicating the NFC location. In this technical solution, the prompt information indicating the NFC location may be automatically displayed on the display under the preset condition, so that a user can determine a location of an NFC antenna on a central display screen based on the prompt information. This helps the user perform a OneHop service operation.

With reference to the first aspect, in an implementation of the first aspect, before the displaying, on a display of the first device, prompt information indicating a near field communication NFC location, the method further includes: determining that a home screen is displayed on the display of the first device or that no display interface of another application is displayed on the display of the first device.

It may be understood that, that a home screen being displayed on the display of the first device may be understood as that a home screen is displayed on the display. For example, the home screen may be a default home screen displayed when the first device is turned on, and the home screen may be one display interface, or may be a plurality of display interfaces. No display interface of another application being displayed on the display of the first device may be understood as that the first device does not run the another application, or the another application runs in the background, and a display interface of the another application is not displayed on the display.

In this way, when determining that the home screen is displayed on the display or no display interface of the another application is displayed on the display, the first device displays the prompt information about the NFC location on the display, so that normal use of the display by the user can be not affected.

With reference to the first aspect, in an implementation of the first aspect, before the displaying, on a display of the first device, prompt information indicating a near field communication NFC location, the method further includes: determining that no navigation application runs on the first device.

For example, the navigation application may be Huawei Maps, Amap^{®}, or the like.

In this way, when the first device does not run the navigation application, the first device may display, on the central display screen, the prompt information indicating the NFC location. When a vehicle does not run the navigation application, it may be determined that the user may not have a navigation requirement in this case, so that operation safety can be ensured, to avoid displaying the prompt information on the display during navigation and endangering driving safety.

With reference to the first aspect, in an implementation of the first aspect, before the displaying, on a display of the first device, prompt information indicating a near field communication NFC location, the method further includes: determining that the first device is in a first gear.

For example, the first gear may be a parking gear, or may be a neutral gear.

In this way, when determining that the first device is in the first gear, the first device displays the prompt information. This prevents the user from performing a OneHop operation in a driving process of the vehicle, so that operation safety can be ensured.

With reference to the first aspect, in an implementation of the first aspect, before the displaying, on a display of the first device, prompt information indicating a near field communication NFC location, the method further includes: determining that the second device supports a OneHop capability.

For example, after the first device establishes the communication connection to the second device, the first device and the second device may obtain capability information of each other, so that the first device can determine whether the second device supports the OneHop capability. Alternatively, the second device may send capability information of the second device to the first device through Bluetooth and the like.

In this way, when determining that the second device supports the OneHop capability, the first device displays, on the display, the prompt information indicating the NFC location, so that the user can perform the OneHop operation, and it can be avoided that the prompt information is still displayed when the second device does not support the OneHop capability, and the user may feel confused.

With reference to the first aspect, in an implementation of the first aspect, the prompt information includes an identifier indicating the second device, and the method further includes: determining a location of the second device. The displaying, on a display of the first device, prompt information indicating a near field communication NFC location includes: The first device displays, based on the location of the second device, the identifier on a side that is of the display and that is close to the second device.

For example, the second device may determine the location of the second device based on an ultrasonic sensor, a laser sensor, or the like, for example, determine that the second device is located on a left side (a side close to a driver seat) or a right side (a side close to a passenger seat) of the display.

In this way, after determining the location of the second device, the first device may display, on the side that is of the display and that is close to the second device based on the location, the identifier indicating the second device. This can accurately provide guidance for the user.

With reference to the first aspect, in an implementation of the first aspect, when the preset condition is the second condition, the displaying, on a display of the first device, prompt information indicating a near field communication NFC location includes: displaying the prompt information on the display of the first device after first preset duration.

For example, the first preset duration may be 2s or 1s. A specific value of the first preset duration is not limited in embodiments of this application.

In this way, when the first device determines that the distance between the first device and the second device is less than or equal to the preset distance, the first device displays the prompt information on the display after the first preset duration, so that it can be avoided that the second device still displays the prompt information on the display when the second device accidentally touches the first device.

It should be understood that the first device may alternatively display the prompt information directly without a need to display the prompt information after the first preset duration.

With reference to the first aspect, in an implementation of the first aspect, the prompt information is located at an uppermost layer of a display interface of the display, and the method further includes: The first device intercepts, within second preset duration, a tap operation performed on the display; and the first device removes the prompt information when the first device intercepts the tap operation a preset quantity of times.

For example, the tap may be a tap operation performed by the user on the display of the first device, or may be a tap operation performed by the second device on the display.

In an embodiment of this application, the prompt information may be located at the uppermost layer of the display interface of the display. When the user or the second device touches the display of the first device, a system may detect the tap operation, and intercept the tap operation. When intercepting the tap operation the preset quantity of times, the first device may remove the prompt information. In this technical solution, it can be avoided that the first device still removes the prompt information when the second device or the user accidentally touches the display.

With reference to the first aspect, in an implementation of the first aspect, the method further includes: The first device removes the prompt information when determining that the distance between the second device and the first device is greater than the first preset distance.

In this way, when determining that the distance between the first device and the second device is greater than the first preset distance, the first device may remove the prompt information indicating the NFC location, so that the display can quickly restore to an original state, and use of the display by the user is not affected.

With reference to the first aspect, in an implementation of the first aspect, the prompt information includes an NFC identifier.

In some other examples, the prompt information may be a static picture, or may be a dynamic picture. The prompt information may alternatively be a guide animation indicating the mobile phone to be close to the NFC location, or the like. The user can intuitively determine the location of the NFC antenna on the display by using the prompt information.

With reference to the first aspect, in an implementation of the first aspect, the first gear is a parking gear.

With reference to the first aspect, in an implementation of the first aspect, the display is a central display screen of the first device.

In some other examples, the display may alternatively be a display other than the central display screen of the first device.

According to a second aspect, an electronic device is provided, including one or more processors and one or more memories. The one or more memories store one or more programs, the one or more programs include instructions, and when the instructions are executed by the one or more processors, the NFC location prompt method according to any one of the first aspect and the possible implementations of the first aspect is performed.

According to a third aspect, a vehicle is provided, including one or more processors and one or more memories. The one or more memories store one or more programs, the one or more programs include instructions, and when the instructions are executed by the one or more processors, the NFC location prompt method according to any one of the first aspect and the possible implementations of the first aspect is performed.

According to a fourth aspect, an NFC location prompt apparatus is provided, including a module configured to implement the NFC location prompt method according to any one of the first aspect and the possible implementations of the first aspect.

According to a fifth aspect, a chip is provided. The chip includes a processor and a communication interface, the communication interface is configured to: receive a signal, and transmit the signal to the processor, and the processor processes the signal, so that the NFC location prompt method according to any one of the first aspect and the possible implementations of the first aspect is performed.

According to a sixth aspect, a readable storage medium is provided. The readable storage medium stores program instructions, and when the program instructions are run on a device, the NFC location prompt method according to any one of the first aspect and the possible implementations of the first aspect is performed.

According to a seventh aspect, a program product is provided. The program product includes program code, and when the program code is run on a wearable device, the NFC location prompt method according to any one of the first aspect and the possible implementations of the first aspect is performed.

### BRIEF DESCRIPTION OF DRAWINGS

FIG. 1 is a functional block diagram of a vehicle according to an embodiment of this application;
FIG. 2 is a diagram of an example of distribution of displays in a vehicle cockpit according to an embodiment of this application;
FIG. 3(a) and FIG. 3(b) are diagrams of a group of graphical user interfaces GUIs according to an embodiment of this application;
FIG. 4(a) and FIG. 4(b) are diagrams of another group of GUIs according to an embodiment of this application;
FIG. 5 is a schematic flowchart of an NFC location display method according to an embodiment of this application;
FIG. 6 is a schematic flowchart of another NFC location display method according to an embodiment of this application;
FIG. 7 is a schematic flowchart of another NFC location display method according to an embodiment of this application;
FIG. 8 is a schematic flowchart of another NFC location display method according to an embodiment of this application;
FIG. 9 is a schematic flowchart of another NFC location display method according to an embodiment of this application;
FIG. 10 is a schematic flowchart of an NFC location prompt method according to an embodiment of this application; and
FIG. 11 is a block diagram of a device according to an embodiment of this application.

### DESCRIPTION OF EMBODIMENTS

The following describes technical solutions of embodiments in this application with reference to accompanying drawings.

The vehicle in this application may be a vehicle in a broad sense, and may be a transportation means (for example, a commercial vehicle, a passenger vehicle, a motorcycle, an airborne vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), an amusement device, or a toy vehicle. A type of the vehicle is not specifically limited in embodiments of this application.

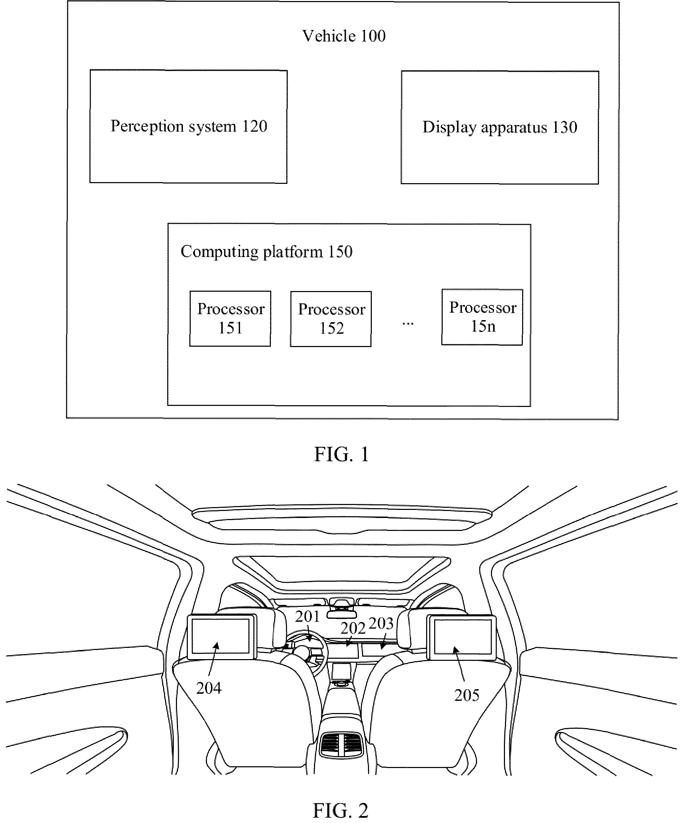

FIG. 1 is a functional block diagram of a vehicle according to an embodiment of this application. As shown in FIG. 1, the vehicle 100 may include a perception system 120, a display apparatus 130, and a computing platform 150. The perception system 120 may include one or more sensors that sense information about an ambient environment of the vehicle 100. For example, the perception system 120 may include a positioning system. The positioning system may be a global positioning system (global positioning system, GPS), or may be one or more of a BeiDou system or another positioning system, an inertial measurement unit (inertial measurement unit, IMU), a lidar, a millimeter-wave radar, an ultrasonic radar, and a camera apparatus.

Some or all functions of the vehicle 100 may be controlled by the computing platform 150. The computing platform 150 may include one or more processors, for example, processors 151 to 15n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory to execute the instructions, to implement a corresponding function.

The display apparatus 130 in a cockpit is mainly classified into two types. A first type is an in-vehicle display, and a second type is a projection display, for example, a head-up display (head-up display, HUD) apparatus. The in-vehicle display is a physical display, and is an important part of an in-vehicle infotainment system. A plurality of displays may be disposed in the cockpit, for example, a digital instrument display, a central display screen, a display in front of a passenger (which is also referred to as a passenger in a front seat) in a co-driver's seat, a display in front of a passenger in a rear-left seat, and a display in front of a passenger in a rear-right seat, and even a vehicle window may be used as a display for display. Head-up display, also referred to as a head-up display system. The head-up display is mainly configured to display driving information such as a speed and navigation on a display device (for example, a windshield) in front of a driver, to reduce gaze transfer time of the driver, avoid a pupil change caused by gaze transfer of the driver, and improve driving safety and comfort. The HUD includes, for example, a combiner head-up display (combiner-HUD, C-HUD) system, a windshield head-up display (windshield-HUD, W-HUD) system, and an augmented reality head-up display (augmented reality HUD, AR-HUD) system. It should be understood that the HUD may alternatively have another type of system with technology evolution. This is not limited in this application.

FIG. 2 is a diagram of an example of distribution of displays in a vehicle cockpit according to an embodiment of this application. As shown in FIG. 2, the cockpit of the vehicle may include an instrument screen 201, a display 202 (which may also be referred to as a central display screen), a display 203 (which may also be referred to as a front passenger entertainment screen), a display 204 (which may also be referred to as an entertainment screen in a second-row left area), and a display 205 (which may also be referred to as an entertainment screen in a second-row right area).

It should be understood that a graphical user interface (graphical user interface, GUI) in the following embodiment is described by using the five-seat vehicle shown in FIG. 2 as an example. Embodiments of this application are not limited thereto. For example, for a seven-seat sport utility vehicle (sport utility vehicle, SUV), a cockpit may include a central display screen, a front passenger entertainment screen, an entertainment screen in a second-row left area, an entertainment screen in a second-row right area, an entertainment screen in a third-row left area, and an entertainment screen in a third-row right area. For another example, for a bus, a cockpit may include a front-row entertainment screen and a rear-row entertainment screen. Alternatively, a cockpit may include a display in a driving area and an entertainment screen in a passenger area. In an implementation, the entertainment screen in the passenger area may alternatively be disposed on the top of the cockpit.

Before the technical solutions of this application are described, some related terms that may be used in embodiments of this application are first described briefly.

Near field communication (near field communication, NFC): Devices (for example, a smartphone and a head unit) that use the NFC technology may exchange data when the devices are close to each other.

OneHop: When an electronic device supports a OneHop capability, service transfer can be implemented through a tap. For example, both an electronic device A and a vehicle B support OneHop. When navigation is run in the electronic device A, the electronic device A can transfer the navigation in the electronic device A to a central display screen only by tapping the central display screen of the vehicle B.

Currently, by using an NFC technology, a cockpit of a vehicle can support a capability of implementing a OneHop service with an electronic device, which brings much convenience to a user. For example, a smartphone having a Harmony operating system transfers, through a tap, services such as navigation and music in the mobile phone to a cockpit having a cockpit-specific Harmony operating system, so that the cockpit can use the services such as navigation and music in the mobile phone.

It should be understood that an NFC chip and an NFC antenna may be deployed in the vehicle, so that the vehicle can have an NFC function. When the vehicle uses the NFC function, the NFC antenna may be configured to receive or transmit a communication signal, and the NFC chip is configured to process the communication signal.

However, due to a layout of cockpits of some vehicles, an NFC antenna is deployed inside a central display screen. Because a frame of the central display screen is narrow, there is no obvious sign of NFC. Therefore, when the user uses the smartphone to tap the central display screen, the user does not know a specific location of the NFC antenna on the central display screen. In this application, a specific location of the NFC antenna on the central display screen is referred to as an NFC location.

In view of this, embodiments of this application provide an NFC location prompt method and a device. In this technical solution, when determining that a preset condition is met, the device may automatically display, on the display, the prompt information indicating the NFC location, to provide guidance for the user, so that the user can determine the location of the NFC antenna.

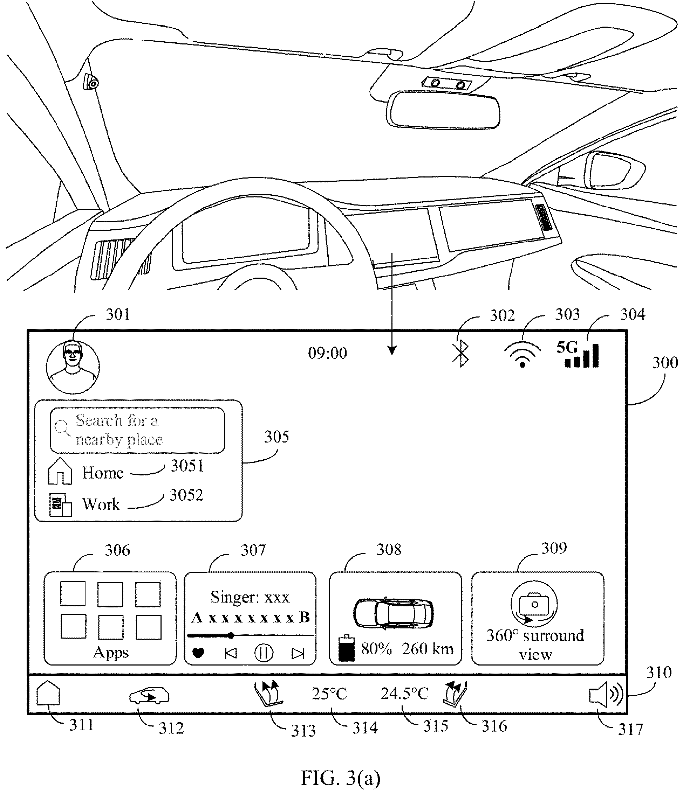

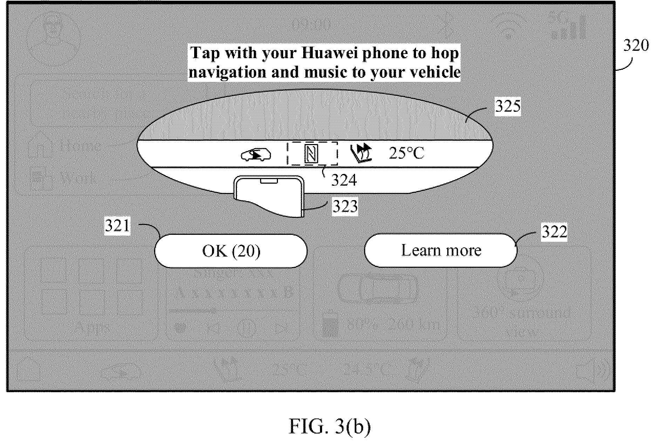

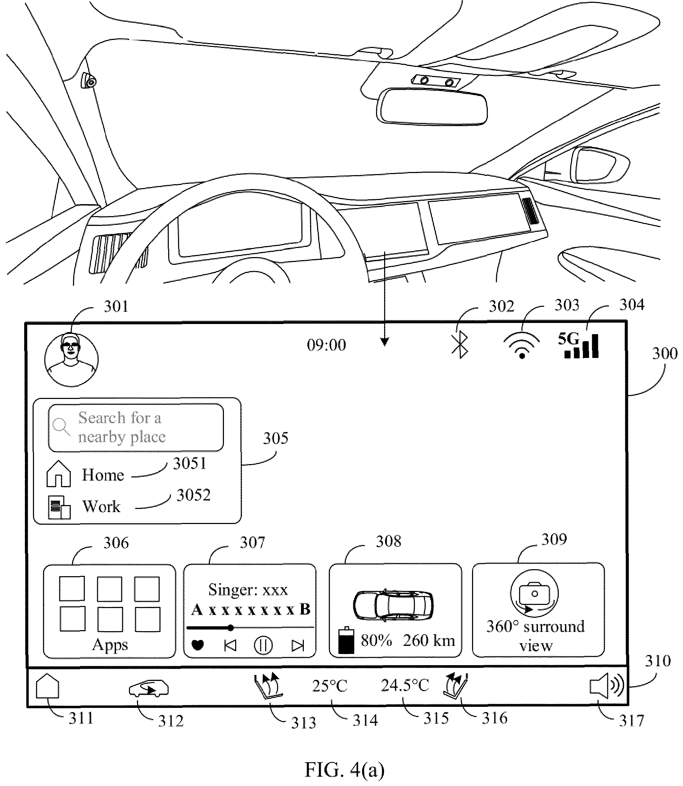

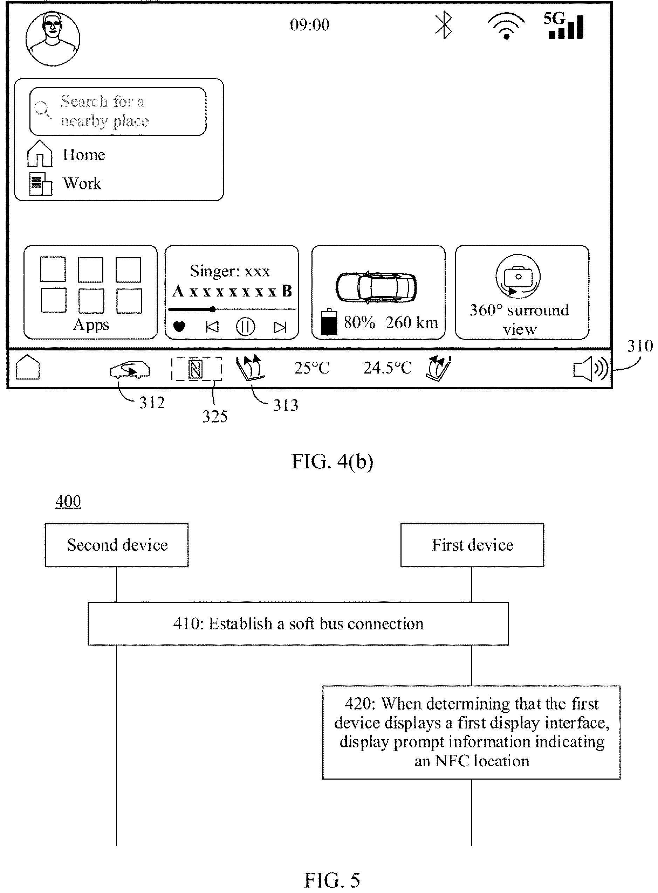

The following describes, with reference to FIG. 3(a), FIG. 3(b), FIG. 4(a), and FIG. 4(b), a technical solution for displaying an NFC location on a central display screen of a vehicle in an embodiment of this application.

For example, FIG. 3(a) and FIG. 3(b) are diagrams of a group of graphical user interfaces (graphical user interfaces, GUIs) according to an embodiment of this application. FIG. 3(a) and FIG. 3(b) show a process in which the central display screen automatically displays the NFC location.

Refer to FIG. 3(a). The central display screen of the vehicle may display a display interface 300 and a function bar 310. The display interface 300 includes user account login information 301, a Bluetooth function icon 304, a Wi-Fi function icon 303, a cellular network signal icon 34, an in-vehicle map application search box 305, a widget 306 for switching to display all applications installed on the vehicle, a widget 307 for switching to display an in-vehicle music application, a widget 308 for displaying a charging status and an available range of the vehicle, and a widget 309 for displaying a 360-degree (°) surround view function of the vehicle. The in-vehicle map application search box 305 may include a "Home" control 3051 and a "Work" control 3052 that are set by the user.

It should be understood that the display interface 300 may be a home screen of the central display screen.

The function bar 310 may include at least an icon 311 for switching to display a home screen of the central display screen, a vehicle internal circulation icon 312, a driver seat heating function icon 313, a driver-area air conditioner temperature display icon 314, a front-passenger-area air conditioner temperature display icon 315, a front passenger seat heating function icon 316, and a volume setting icon 317.

In this embodiment of this application, the vehicle may establish a communication connection to an electronic device.

For example, the vehicle may establish the communication connection to the electronic device through a soft bus. When the vehicle detects that the electronic device and the vehicle log in to a same account, the central display screen of the vehicle may display a GUI shown in FIG. 3(b).

It should be understood that, in this case, the electronic device needs to have a soft bus module, so that the electronic device can establish the communication connection to the vehicle through the soft bus. For example, a Harmony operating system is installed on the electronic device, and the vehicle has a cockpit-specific Harmony operating system.

It should be understood that, in this application, the electronic device may establish the communication connection to the vehicle through Bluetooth. In some other examples, the electronic device may alternatively establish the communication connection to the vehicle in another wireless or wired manner. For example, the electronic device and the vehicle are in a same local area network.

In another example, when the vehicle detects that the electronic device and the vehicle log in to a same account, the vehicle may establish the communication connection to the electronic device, and the vehicle further determines that the central display screen displays a home screen (or the central display does not display a display interface of another application). In this case, the central display screen of the vehicle may display a GUI shown in FIG. 3(b).

In another example, when the vehicle detects that the electronic device and the vehicle log in to a same account, the vehicle may establish the communication connection to the electronic device. When further determining that the vehicle does not start navigation, the vehicle may display a GUI shown in FIG. 3(b).

In another example, when the vehicle detects that the electronic device and the vehicle log in to a same account, the vehicle may establish the communication connection to the electronic device, and the vehicle further determines that the vehicle is in a P gear and the central display screen displays a home screen (or the central display does not display a display interface of another application). In this case, the central display screen of the vehicle may display a GUI shown in FIG. 3(b). In some other examples, each time the vehicle detects that the vehicle switches from another gear to a P gear, the vehicle may trigger the central display screen to display a GUI shown in FIG. 3(b).

In another example, when the vehicle detects that the electronic device and the vehicle log in to a same account, the vehicle may establish the communication connection to the electronic device. When further determining that the vehicle is in a P gear and the vehicle does not start navigation, the vehicle may display a GUI shown in FIG. 3(b). In some other examples, each time the vehicle detects that the vehicle switches from another gear to a P gear, the vehicle may trigger the central display screen to display a GUI shown in FIG. 3(b).

It should be further understood that, in the foregoing examples, when the electronic device and the vehicle do not log in to a same account, the electronic device and the vehicle need to perform mutual authentication previously. In this case, the electronic device may also establish the communication connection to the vehicle.

Refer to FIG. 3(b). The GUI is a display interface 320 on which the central display screen prompts the NFC location. The display interface 320 may include text content "Tap with your Huawei phone to hop navigation and music to your vehicle", a display widget 325, a mobile phone icon 323, a function button 321, and a function button 322.

For example, the display widget 325 may include some function icons in the function bar and an NFC area identifier 324. In this way, a location of the NFC on the central display screen can be clearly presented to the user, so that the user can accurately implement a OneHop service.

For example, text content "OK (20)" may be displayed in the function button 321, and text content "Learn more" may be displayed in the function button 322. After detecting an operation of tapping the function button 321 by the user, the vehicle may close the display interface 320. After detecting an operation of tapping the function button 322 by the user, the vehicle may pop up a new display interface to introduce the NFC location or function in detail.

In some other examples, the mobile phone icon 323 may alternatively be displayed as an animation effect. For example, the mobile phone icon 323 may gradually approach the NFC area identifier 324 from a location away from the NFC area identifier 324, so that the user can be more intuitively guided to use the mobile phone to perform a OneHop service operation.

In some other examples, when the NFC location needs to be displayed, the vehicle may further display the NFC identifier at a location that is at the bottom of the central display screen and that corresponds to the location of the NFC antenna, and does not need to display the display interface 320, so that use of the central display by the user is not affected.

It should be understood that, when the user starts navigation on the mobile phone, the user uses the mobile phone to touch the NFC location on the central display screen. In this way, the navigation can be transferred to the central display screen for display.

FIG. 4(a) and FIG. 4(b) are diagrams of another group of GUIs according to an embodiment of this application. FIG. 4(a) and FIG. 4(b) show another process in which the central display screen automatically displays the NFC location.

It should be understood that, for FIG. 4(a), refer to the related descriptions in FIG. 3(a). For brevity, details are not described herein again.

Refer to FIG. 4(b). An NFC icon 325 may be displayed in a function bar 310.

For example, the NFC icon 325 may be located between the vehicle internal circulation icon 312 and the driver seat heating function icon 313.

It should be understood that the NFC icon 325 may alternatively be located at another location of the function bar 310. This is not limited in embodiments of this application. For example, when the NFC antenna is disposed between the icon 311 and the icon 312, the NFC icon 325 may be located between the icon 311 and the icon 312.

Alternatively, when the NFC antenna is disposed at another location of the central display screen, the NFC icon 325 may be displayed at the corresponding location.

In some other examples, the NFC icon 325 may alternatively be displayed with a blinking effect, to more clearly prompt the user with the NFC location.

Alternatively, an area in which the NFC icon 325 is located in the function bar 310 may be a display identifier. For example, the area in which the NFC icon 325 is located may be highlighted or displayed in a color. Alternatively, the central display screen may further display an arrow used to point to an area in which the NFC icon 325 is located, or the like.

FIG. 5 is a schematic flowchart of an NFC location display method according to an embodiment of this application. As shown in FIG. 5, the method 400 may include step 410 and step 420.

410: A first device establishes a communication connection to a second device.

For example, the second device may be an electronic device like a smartphone, a tablet computer, or a wearable device. The first device may be a vehicle, or may be a large-screen electronic device like a tablet computer, a notebook computer, or a smart television. This is not limited in embodiments of this application.

In this application, an example in which the second device is a smartphone on which a Harmony operating system is installed and the first device is a vehicle having a cockpit-specific Harmony operating system is used for description. However, this shall not constitute any limitation on an application scenario of this application. This embodiment of this application may be applied to any scenario in which an NFC location needs to be prompted.

For example, when each of the first device and the second device has a Harmony operating system, the first device and the second device may establish the communication connection through a soft bus, so that data can be transmitted between the first device and the second device through the soft bus. In some other examples, the first device and the second device may alternatively be devices having other operating systems provided that the first device can establish a soft bus connection to the second device.

It should be understood that, when the first device establishes the communication connection to the second device through the soft bus, a connection process may be automatically performed when the first device and the second device log in to a same account or are in a same local area network.

It may be understood that the first device may alternatively establish a communication connection to the second device in another manner, for example, in a wireless or wired manner.

420: When determining that the first device displays a first display interface, display prompt information indicating an NFC location.

For example, refer to FIG. 2. The first display interface may be a display interface of the central display screen 202 of the vehicle. For example, the first display interface may be a home screen of the central display screen, or the first display interface may be a display interface that is of another application and that is not shown on the central display screen.

When the vehicle determines that the central display screen displays the home screen or does not display the display interface of the another application, the vehicle may control the central display screen to display the prompt information indicating the NFC location, to prompt the user with a location of an NFC antenna on the central display screen.

For example, refer to FIG. 3(b). The prompt information may be the display interface 320. The prompt information may be a static picture, or may be a dynamic picture. The prompt information may alternatively be a guide animation indicating the mobile phone to be close to the NFC location, or the like. The user can intuitively determine the location of the NFC antenna on the central display screen by using the prompt information.

In some other examples, refer to FIG. 2. The first display interface may alternatively be another display 203 or display 204 of the vehicle. This is not limited in embodiments of this application.

In an embodiment of this application, when establishing the communication connection to the mobile phone, the vehicle may further determine whether the central display screen displays the home screen. When determining that the central display screen displays the home screen, the vehicle may automatically display, on the central display screen, the prompt information indicating the NFC location. Therefore, the user can determine the location of the NFC antenna on the central display screen based on the prompt information. This helps the user perform a OneHop service operation.

It should be understood that, in step 420, when displaying the first display interface, the vehicle may further directly display the prompt information indicating the NFC location, without performing a determining process.

In some embodiments, before step 420, the method may further include:
The vehicle determines that a gear of the vehicle is a parking gear (P gear).

It should be understood that the step in which the vehicle determines that the vehicle is in the P gear may alternatively be in step 420. This is not limited in embodiments of this application.

In this way, when the vehicle determines that the vehicle is in the P gear and further determines that the central display screen displays a home page, the prompt information for prompting the user with the NFC location is displayed on the central display screen, to prevent the user from performing the OneHop operation in a driving process of the vehicle. This ensures operation safety.

In some other examples, when the vehicle determines that the vehicle is in a neutral gear (N gear) and further determines that the central display screen displays the home page, the prompt information for prompting the user with the NFC location is displayed on the central display screen.

In some embodiments, before step 420, the method may further include:
determining that the second device supports a OneHop capability.

It should be understood that, after the first device establishes the communication connection to the second device, the first device may obtain a capability of the second device, and the second device may obtain a capability of the first device.

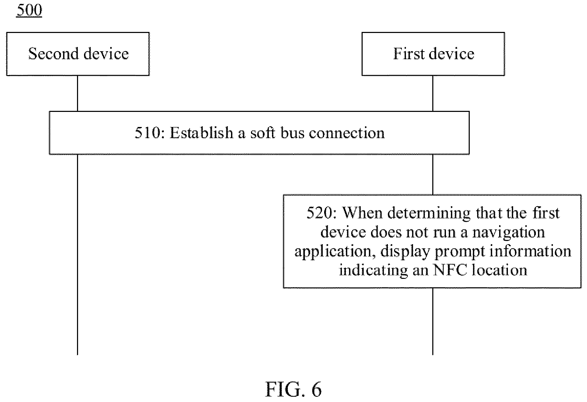

FIG. 6 is a schematic flowchart of another NFC location display method according to an embodiment of this application. As shown in FIG. 6, the method 500 may include step 510 and step 520.

510: A first device establishes a communication connection to a second device.

It may be understood that, for step 510, refer to the related descriptions of step 410. For brevity, details are not described herein again.

520: When determining that the first device does not run a navigation application, display prompt information indicating an NFC location.

For example, the navigation application may be Huawei Maps, Amap^{®}, Baidu Maps^{®}, or the like. When the first device does not run the navigation application, the first device may display, on a central display screen, the prompt information indicating the NFC location.

It should be understood that, when the first device does not run the navigation application, the central display screen of the first device may display a display interface of another application, or may display a home screen. This is not limited in embodiments of this application.

In this way, when a vehicle does not run the navigation application, it may be determined that the user may not have a navigation requirement at this moment, so that operation safety can be ensured.

For example, refer to FIG. 3(b). The prompt information may be the display interface 320. For another example, the prompt information may alternatively be a guide animation indicating a mobile phone to be close to the NFC location. Alternatively, the prompt information may be an NFC identifier.

It should be understood that, in step 520, when the vehicle does not run the navigation application, the vehicle may further directly display the prompt information indicating the NFC location, without performing a determining process.

In an embodiment of this application, when establishing the communication connection to the mobile phone, the vehicle may further determine whether the navigation application runs. When determining that the vehicle does not run the navigation application, the vehicle may automatically display, on the central display screen, the prompt information indicating the NFC location. Therefore, the user can determine a location of an NFC antenna on the central display screen based on the prompt information. This helps the user perform a OneHop service operation.

In some embodiments, before step 520, the method may further include:
The vehicle determines that a gear of the vehicle is a parking gear (P gear).

It should be understood that the step in which the vehicle determines that the vehicle is in the P gear may alternatively be in step 520. This is not limited in embodiments of this application.

In this way, when the vehicle determines that the vehicle is in the P gear and further determines that the vehicle does not run the navigation application, the prompt information for prompting the user with the NFC location is displayed on the central display screen, to prevent the user from performing the OneHop operation in a driving process of the vehicle. This ensures operation security.

In some cases, the user needs to frequently switch the gear of the vehicle. Each time the vehicle detects that the gear is switched to the P gear, step 520 may be performed.

In some other examples, when the vehicle determines that the vehicle is in a neutral gear (N gear) and further determines that the vehicle does not run the navigation application, the prompt information for prompting the user with the NFC location is displayed on the central display screen.

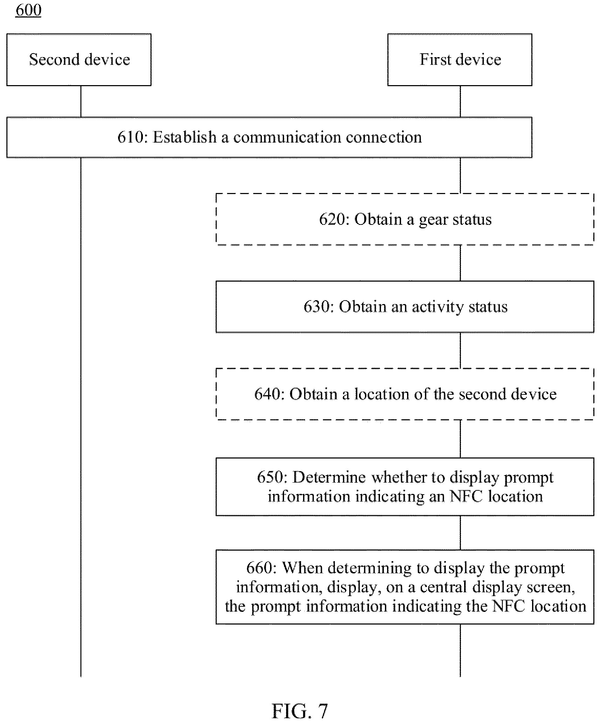

FIG. 7 is a schematic flowchart of another NFC location display method according to an embodiment of this application. As shown in FIG. 7, the method 600 may include step 610 to step 660.

610: A first device establishes a communication connection to a second device.

It should be understood that for step 610, refer to the related descriptions of step 410. For brevity, details are not described herein again.

In some examples, when the first device establishes the communication connection to the second device through the soft bus, the soft bus of the first device may be further used to send a self-networking success message to a cockpit collaboration service.

It should be understood that, after the first device establishes the connection to the second device through the soft bus, it may be understood that the first device and the second device successfully perform self-networking. In this case, the soft bus of the first device may be used to send the self-networking success message to the cockpit collaboration service.

620: The first device obtains a gear status.

It should be understood that the gear status indicates a current gear of the first device, for example, a P gear, an N gear, a drive gear (D gear), or a reverse gear (R gear).

For example, the first device may obtain the current gear of the first device by using a cockpit subsystem.

630: The first device obtains an activity status.

For example, an activity manager server (activity manager server, AMS) of the first device may manage an activity corresponding to an application running on the vehicle, and the first device may determine, by using the AMS, which application is running. For example, the first device may determine whether the navigation application is running.

640: The first device obtains a location of the second device.

For example, the first device may include a mobile sensing development platform (mobile sensing development platform, MSDP), and the MSDP may include at least a plurality of sensors, for example, an ultrasonic sensor and a millimeter-wave sensor. The MSDP may determine locations of the second device and the central display screen by using the plurality of sensors, so that the first device may obtain the location of the second device.

For example, the location of the second device may be on a left side (a driver side) of the central display screen, or the location of the second device may be on a right side (a front passenger side) of the central display screen.

It should be understood that step 620 to step 640 are optional steps. In some examples, step 620 to step 640 may not be performed.

650: The first device determines whether to display prompt information indicating an NFC location.

It should be understood that the first device may determine, based on related content in step 620 to step 640, whether to display, on the central display screen, the prompt information indicating the NFC location.

In some examples, when the first device determines that the gear is the P gear, and the first device does not run another application, the first device may determine to display the prompt information indicating the NFC location. Otherwise, the first device may determine not to display the prompt information indicating the NFC location.

In some other examples, when the first device determines that the gear is the P gear, and the first device does not run the navigation application, the first device may determine to display the prompt information indicating the NFC location. Otherwise, the first device may determine not to display the prompt information indicating the NFC location.

In some other examples, when determining that the central display screen displays the home screen, the first device may determine to display the prompt information indicating the NFC location. Otherwise, the first device may determine not to display the prompt information indicating the NFC location.

660: When determining to display the prompt information, the first device displays, on the central display screen, the prompt information indicating the NFC location.

It should be understood that, when determining to display the prompt information, the first device displays, on the central display screen, the prompt information indicating the NFC location. For example, refer to FIG. 3(b).

In some other examples, when determining to display the prompt information, the first device may further display the prompt information based on the location of the second device. For example, when the cockpit collaboration service determines that the second device is located on the left side (the driver side) of the central display screen, an icon of the second device in the prompt information may be located on the left side of the central display screen.

It should be understood that an execution sequence of step 610 to step 660 is not limited in this application. In some embodiments, a part of steps in step 610 to step 660 may not be performed, or may be replaced with another step. For example, steps 620, 630, 640, and 650 may not be performed.

In an embodiment of this application, after the first device establishes the communication connection to the second device, the first device may obtain corresponding information like the gear status, the activity status, and the location of the second device, to comprehensively determine whether the prompt information indicating the NFC location needs to be displayed. When determining that the prompt information needs to be displayed, the first device displays the prompt information on the central display screen, so that the user can determine the location of the NFC antenna on the central display based on the prompt information. This helps the user perform a OneHop service operation.

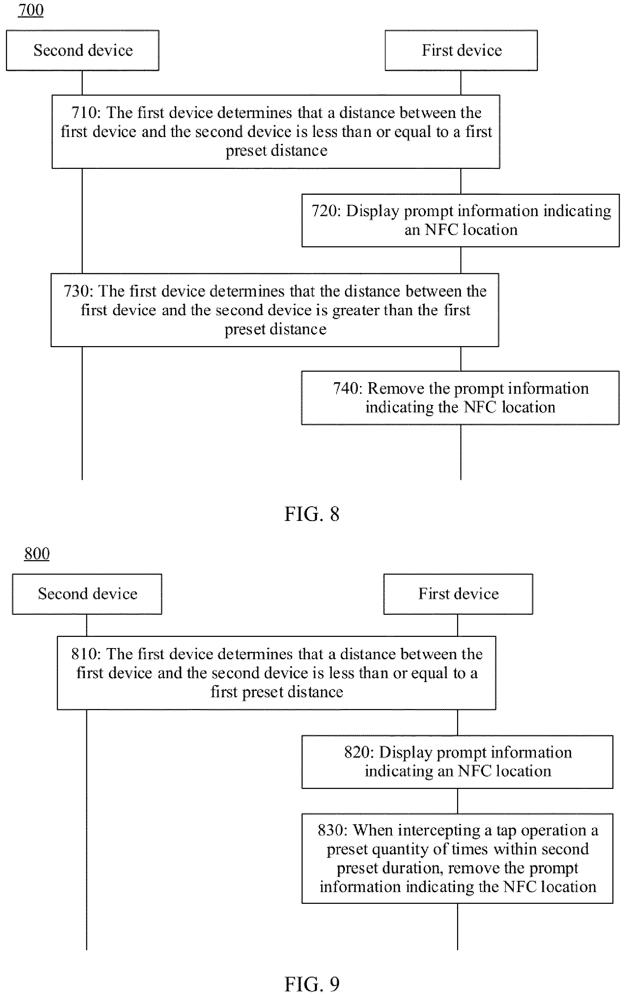

The following describes, with reference to FIG. 8 and FIG. 9, a technical solution of displaying an NFC location based on a distance between a first device and a second device in an embodiment of this application.

FIG. 8 is a schematic flowchart of another NFC location display method according to an embodiment of this application. As shown in FIG. 8, the method 700 may include step 710 to step 740.

710: The first device determines that a distance between the first device and the second device is less than or equal to a first preset distance.

It should be understood that both the first device and the second device are NFC devices, so that the distance between the first device and the second device can be determined by using an NFC technology. In some other examples, the distance between the first device and the second device may alternatively be determined by the second device.

When the first device performs NFC communication with the second device, for example, when the distance between the first device and the second device is less than or equal to the first preset distance, an NFC antenna of the first device sends an interrupt on signal to system software.

A specific value of the first preset distance is not limited in embodiments of this application. For example, the first preset distance may be 5 cm or 3 cm.

720: The first device displays prompt information indicating an NFC location.

It should be understood that, for the prompt information, refer to the foregoing related descriptions.

For example, the first device may control a central display screen or another display to display the prompt information.

In some other examples, the first device may further control, after first preset duration, the central display screen to display the prompt information indicating the NFC location. In this way, it can be avoided that the first device still displays the prompt information when the second device accidentally touches the first device.

A specific value of the first preset duration is not limited in embodiments of this application. For example, the first preset duration may be 2s, 5s, or the like.

For example, after receiving the interrupt on signal, or after the first preset duration after receiving the interrupt on signal, the system software of the first device may control the central display screen to display the prompt information indicating the NFC location. The system software may be system software used to manage a home screen of the central display screen.

730: The first device determines that the distance between the first device and the second device is greater than the first preset distance.

When the distance between the first device and the second device is greater than the first preset distance, the NFC antenna of the first device sends an interrupt off signal to the system software of the first device.

740: Remove the prompt information indicating the NFC location.

Then, when receiving the off signal, the system software of the first device may control the central display screen to remove the prompt information.

It should be understood that the prompt information may alternatively be an animation with a transparent background for guiding the NFC location, so that other content displayed on the central display screen may not be blocked. When receiving the off signal, the system software of the first device controls the central display screen to remove the prompt information, so that the central display screen can quickly restore to an original state.

It should be understood that, in some examples, step 710 and step 720 may be in a same step, and step 730 and step 740 may be in a same step. This is not limited in embodiments of this application. In this case, when the distance between the first device and the second device is less than or equal to the first preset distance, the first device may directly display the prompt information indicating the NFC location, without performing a determining process. Alternatively, when the distance between the second device and the first device is greater than the first preset distance, the first device may directly remove the prompt information indicating the NFC location, without performing a determining process.

In an embodiment of this application, when determining that the distance between the first device and the second device is less than or equal to the first preset distance, the first device may display the prompt information indicating the NFC location. When determining that the distance between the first device and the second device is greater than the first preset distance, the first device may remove the prompt information indicating the NFC location. In this technical solution, the first device can flexibly display or remove the prompt information of the NFC location based on the distance between the first device and the second device.

FIG. 9 is a schematic flowchart of another NFC location display method according to an embodiment of this application. As shown in FIG. 9, the method 800 may include step 810 to step 830.

810: The first device determines that a distance between the first device and the second device is less than or equal to a first preset distance.

820: Display prompt information indicating an NFC location.

It should be understood that for steps 810 and 820, refer to the related descriptions of steps 710 and 720. For brevity, details are not described again.

In some other examples, the prompt information is located at an uppermost layer of a display interface of a central display screen of the first device. In other words, the prompt information may be directly received and respond a user operation.

830: When intercepting a tap operation a preset quantity of times within second preset duration, remove the prompt information indicating the NFC location.

When the user or the second device touches the central display screen of the first device, a system may detect the tap operation. In this case, because the NFC prompt information is displayed at an uppermost layer of the central display screen, the system may intercept the tap operation.

It should be understood that the tap operation may be a tap operation performed by the user on the central display screen of the first device, or may be a tap operation performed by the second device on the central display screen. A value of the preset quantity of times is set, so that it can be avoided that the prompt information is still removed when the second device accidentally touches the central display screen.

A specific value of the second preset duration is not limited in embodiments of this application.

In an embodiment of this application, when determining that the distance between the first device and the second device is less than or equal to the first preset distance, the first device may display the prompt information indicating the NFC location. Within the second preset duration, when intercepting the tap operation the preset quantity of times, the first device may remove the prompt information. In this technical solution, it can be avoided that the prompt information of the NFC location is still removed when the user or the second device accidentally touches the central display screen of the first device.

It should be understood that the technical solutions in FIG. 5 to FIG. 9 may be used in combination. In this case, it should not be considered that the technical solutions go beyond the protection scope of this application.

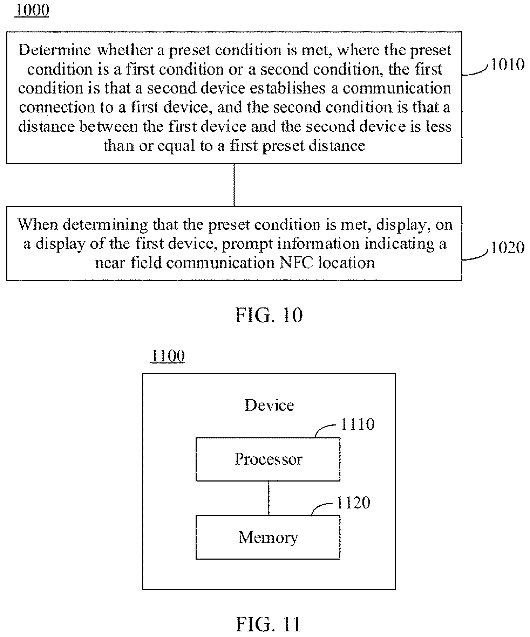

FIG. 10 is a schematic flowchart of an NFC location prompt method according to an embodiment of this application. As shown in FIG. 10, the method may be applied to a first device, and the method may include step 1010 and step 1020.

The first device is capable of performing near field communication NFC with a second device.

1010: Determine whether a preset condition is met, where the preset condition is a first condition or a second condition, the first condition is that the second device establishes a communication connection to the first device, and the second condition is that a distance between the first device and the second device is less than or equal to a first preset distance.

It should be understood that, for a process in which the second device establishes the communication connection to the first device, refer to the foregoing related descriptions.

It should be understood that both the first device and the second device are NFC devices, so that the distance between the first device and the second device can be determined by using an NFC technology. In the second condition, when the distance between the second device and the first device is less than or equal to the first preset distance, an NFC antenna of the first device sends an interrupt on signal to system software, so that the first device can determine that a current distance between the second device and the first device is less than or equal to the first preset distance.

A specific value of the first preset distance is not limited in embodiments of this application.

1020: When determining that the preset condition is met, display, on a display of the first device, prompt information indicating an NFC location.

It should be understood that the prompt information indicating the NFC location may be a static picture, or may be a dynamic picture. The prompt information may alternatively be a guide animation indicating the mobile phone to be close to the NFC location, or the like. Alternatively, the prompt information may be an NFC identifier. A user can intuitively determine the location of the NFC antenna on the display by using the prompt information.

In an example, refer to FIG. 3(b). The prompt information may be the display interface 320. The prompt information may include the NFC identifier 324 and the mobile phone icon 323, and may further include a text and the like.

In another example, refer to FIG. 4(b). The prompt information may be the NFC identifier 325.

For example, when the first device is a vehicle, the display may be a central display screen of the first device, or may be another display of the first device.

In an embodiment of this application, when determining that the preset condition is met, the first device may display, on the display of the first device, the prompt information indicating the NFC location. In this technical solution, the prompt information indicating the NFC location may be automatically displayed on the display under the preset condition, so that a user can determine a location of an NFC antenna on a central display screen based on the prompt information. This helps the user perform a OneHop service operation.

In some embodiments, before the displaying, on a display of the first device, prompt information indicating an NFC location, the method 1000 may further include:
determining that a home screen is displayed on the display of the first device or that no display interface of another application is displayed on the display of the first device.

It may be understood that, a home screen being displayed on the display of the first device may be understood as that a home screen is displayed on the display. For example, the home screen may be a default home screen displayed when the first device is turned on, and the home screen may be one display interface, or may be a plurality of display interfaces. No display interface of another application being displayed on the display of the first device may be understood as that the first device does not run the another application, or the another application runs in the background, and a display interface of the another application is not displayed on the display.

For example, refer to FIG. 3(a). The display interface 300 may be the home screen of the central display screen.

In this way, when determining that the home screen is displayed on the display or no display interface of the another application is displayed on the display, the first device displays the prompt information about the NFC location on the display, so that normal use of the display by the user can be not affected.

In some embodiments, before the displaying, on a display of the first device, prompt information indicating an NFC location, the method 1000 may further include:
determining that no navigation application runs on the first device.

For example, the navigation application may be Huawei Maps, Amap^{®}, or the like.

In this way, when the first device does not run the navigation application, the first device may display, on the central display screen, the prompt information indicating the NFC location. When a vehicle does not run the navigation application, it may be determined that the user may not have a navigation requirement in this case, so that operation safety can be ensured, to avoid displaying the prompt information on the display during navigation and endangering driving safety.

In some embodiments, before the displaying, on a display of the first device, prompt information indicating an NFC location, the method 1000 may further include:
determining that the first device is in a first gear.

For example, the first gear may be a parking gear, or may be a neutral gear.

In this way, when determining that the first device is in the first gear, the first device displays the prompt information. This prevents the user from performing a OneHop operation in a driving process of the vehicle, so that operation safety can be ensured.

In some embodiments, before the displaying, on a display of the first device, prompt information indicating an NFC location, the method 1000 may further include:
determining that the second device supports a OneHop capability.

For example, after the first device establishes the communication connection to the second device, the first device and the second device may obtain capability information of each other, so that the first device can determine whether the second device supports the OneHop capability. Alternatively, the second device may send capability information of the second device to the first device through Bluetooth and the like.

In this way, when determining that the second device supports the OneHop capability, the first device displays, on the display, the prompt information indicating the NFC location, so that the user can perform the OneHop operation, and it can be avoided that the prompt information is still displayed when the second device does not support the OneHop capability, and the user may feel confused.

In some embodiments, the prompt information includes an identifier indicating the second device, and the method 1000 may further include:
determining a location of the second device.

The displaying, on a display of the first device, prompt information indicating an NFC location includes: The first device displays, based on the location of the second device, the identifier on a side that is of the display and that is close to the second device.

It should be understood that the second device may determine the location of the second device based on an ultrasonic sensor, a laser sensor, or the like, for example, determine that the second device is located on a left side (a side close to a driver seat) or a right side (a side close to a passenger seat) of the display.

For example, refer to FIG. 3(b). The identifier may be the mobile phone icon 323. When the vehicle determines that the mobile phone is located on a left side (a side close to a driver seat) of the central display screen, the mobile phone icon 323 in the prompt information may be displayed on the left side of the central display screen.

In this way, after determining the location of the second device, the first device may display, on the side that is of the display and that is close to the second device based on the location, the identifier indicating the second device. This can accurately provide guidance for the user.

In some embodiments, when the preset condition is the second condition, the displaying, on a display of the first device, prompt information indicating an NFC location includes:
displaying the prompt information on the display of the first device after first preset duration.

For example, the first preset duration may be 2s or 1s. A specific value of the first preset duration is not limited in embodiments of this application.

In this way, when the first device determines that the distance between the first device and the second device is less than or equal to the preset distance, the first device displays the prompt information on the display after the first preset duration, so that it can be avoided that the second device still displays the prompt information on the display when the second device accidentally touches the first device.

It should be understood that the first device may alternatively display the prompt information directly without a need to display the prompt information after the first preset duration.

In some embodiments, the prompt information is located at an uppermost layer of a display interface of the display, and the method 1000 may further include:
The first device intercepts, within second preset duration, a tap operation performed on the display.

The first device removes the prompt information when the first device intercepts the tap operation a preset quantity of times.

For example, the tap may be a tap operation performed by the user on the display of the first device, or may be a tap operation performed by the second device on the display.

In an embodiment of this application, the prompt information may be located at the uppermost layer of the display interface of the display. When the user or the second device touches the display of the first device, a system may detect the tap operation, and intercept the tap operation. When intercepting the tap operation the preset quantity of times, the first device may remove the prompt information. In this technical solution, it can be avoided that the first device still removes the prompt information when the second device or the user accidentally touches the display.

In some embodiments, the method 1000 may further include:
The first device removes the prompt information when determining that the distance between the second device and the first device is greater than the first preset distance.

In this way, when determining that the distance between the first device and the second device is greater than the first preset distance, the first device may remove the prompt information indicating the NFC location, so that the display can quickly restore to an original state, and use of the display by the user is not affected.

In some embodiments, the prompt information includes an NFC identifier.

In some embodiments, the first gear is a parking gear.

In some embodiments, the display is the central display screen of the first device.

In some other examples, the display may alternatively be a display other than the central display screen of the first device.

FIG. 11 is a block diagram of a device according to an embodiment of this application. As shown in FIG. 11, the device 1100 may include one or more processors 1110 and one or more memories 1120. The one or more memories 1120 store one or more programs. The one or more programs include instructions. When the instructions are executed by the one or more processors 1110, the NFC location prompt method according to any one of the foregoing possible implementations is performed.

For example, the device 1100 may be the vehicle 100 described above. Alternatively, the device 1100 may be an electronic device like a smart television.

An embodiment of this application further provides a chip. The chip includes a processor and a communication interface. The communication interface is configured to: receive a signal, and transmit the signal to the processor, and the processor processes the signal, so that the NFC location prompt method according to any one of the foregoing possible implementations is performed.

It may be understood that, to implement the foregoing functions, the device includes corresponding hardware and/or software modules for performing the functions. Algorithm steps in the examples described with reference to embodiments disclosed in this specification can be implemented by hardware or a combination of hardware and software in this application. Whether a function is performed by hardware or software depends on particular applications and design constraint conditions of the technical solutions. A person skilled in the art may use different methods to implement the described functions for each particular application with reference to embodiments, but it should not be considered that the implementation goes beyond the scope of this application.

In this embodiment, the device may be divided into function modules according to the foregoing method examples. For example, each function module may be obtained through division based on each corresponding function, or two or more functions may be integrated into one processing module. The integrated module may be implemented in a form of hardware. It should be noted that module division in this embodiment is an example and is merely logical function division. In actual implementation, there may be another division manner.

An embodiment of this application further provides an NFC location prompt apparatus, including a module configured to implement the NFC location prompt method in any one of the foregoing embodiments.

An embodiment of this application further provides a readable storage medium. The readable storage medium stores instructions. When the instructions are run on a device, the device is enabled to perform the foregoing related method steps, to implement the NFC location prompt method in the foregoing embodiments.

An embodiment of this application further provides a program product. When the program product runs on a device, the device is enabled to perform the foregoing related steps, to implement the NFC location prompt method in the foregoing embodiments.

In addition, an embodiment of this application further provides an apparatus. The apparatus may be specifically a chip, a component, or a module. The apparatus may include a processor and a memory that are connected. The memory is configured to store executable instructions. When the apparatus runs, the processor may execute the executable instructions stored in the memory, to enable the chip to perform the NFC location prompt method in the foregoing method embodiments.

The device, the readable storage medium, the program product, or the chip provided in embodiments of this application is configured to perform the corresponding method provided above. Therefore, for beneficial effects that can be achieved by the device, the readable storage medium, the program product, or the chip, refer to the beneficial effects in the corresponding method provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions of embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An NFC location prompt method, wherein the method is applied to a first device, the first device is capable of performing near field communication NFC with a second device, and the method comprises:
determining whether a preset condition is met, wherein the preset condition is a first condition or a second condition, the first condition is that the first device establishes a communication connection to the second device, and the second condition is that a distance between the first device and the second device is less than or equal to a first preset distance; and
when determining that the preset condition is met, displaying, on a display of the first device, prompt information indicating an NFC location.

2. The method according to claim 1, wherein before the displaying, on a display of the first device, prompt information indicating an NFC location, the method further comprises:
determining that a home screen is displayed on the display of the first device or that no display interface of another application is displayed on the display of the first device.

3. The method according to claim 1 or 2, wherein before the displaying, on a display of the first device, prompt information indicating an NFC location, the method further comprises:
determining that no navigation application runs on the first device.

4. The method according to any one of claims 1 to 3, wherein before the displaying, on a display of the first device, prompt information indicating an NFC location, the method further comprises:
determining that the first device is in a first gear.

5. The method according to any one of claims 1 to 4, wherein before the displaying, on a display of the first device, prompt information indicating an NFC location, the method further comprises:
determining that the second device supports a OneHop capability.

6. The method according to any one of claims 1 to 5, wherein the prompt information comprises an identifier indicating the second device, and the method further comprises:
determining a location of the second device; and
the displaying, on a display of the first device, prompt information indicating an NFC location comprises:
displaying, by the first device based on the location of the second device, the identifier on a side that is of the display and that is close to the second device.

7. The method according to any one of claims 1 to 6, wherein when the preset condition is the second condition, the displaying, on a display of the first device, prompt information indicating an NFC location comprises:
displaying the prompt information on the display of the first device after first preset duration.

8. The method according to claim 7, wherein the prompt information is located at an uppermost layer of a display interface of the display, and the method further comprises:
intercepting, by the first device within second preset duration, a tap operation performed on the display; and
removing, by the first device, the prompt information when the first device intercepts the tap operation a preset quantity of times.

9. The method according to claim 7, wherein the method further comprises:
removing, by the first device, the prompt information when determining that the distance between the second device and the first device is greater than the first preset distance.

10. The method according to any one of claims 1 to 9, wherein the prompt information comprises an NFC identifier.

11. The method according to claim 4, wherein the first gear is a parking gear.

12. The method according to any one of claims 1 to 11, wherein the display is a central display screen of the first device.

13. An electronic device, comprising one or more processors and one or more memories, wherein the one or more memories store one or more programs, the one or more programs comprise instructions, and when the instructions are executed by the one or more processors, the NFC location prompt method according to any one of claims 1 to 12 is performed.

14. A vehicle, comprising one or more processors and one or more memories, wherein the one or more memories store one or more programs, the one or more programs comprise instructions, and when the instructions are executed by the one or more processors, the NFC location prompt method according to any one of claims 1 to 12 is performed.

15. A readable storage medium, wherein the readable storage medium stores program instructions, and when the program instructions are run on a device, the NFC location prompt method according to any one of claims 1 to 12 is performed.
